# EUROPEAN PATENT APPLICATION

(11) **EP 2 426 185 A1**
(43) Date of publication of application: **07.03.2012**
(21) Application number: 11185098.8
(22) Date of filing: 22.03.2005
(51) Int. Cl.: C09J 7/02

(54) **Roll stabilized double-sided pressure sensitive adhesive tape assembly**

(30) Priority: 30.04.2004 US 567377 P
(62) Divisional of application: 05729415.9
(71) Applicant: 3M Innovative Properties Company, Saint Paul, MN 55133-3427 (US)
(72) Inventor: Zoller, Panu, K., St. Paul, MN 55133-3427 (US)
(74) Representative: Vossius & Partner

(57) **Abstract**

The present invention relates to an article assembly comprising a plastic or an elastomeric article, a double-sided adhesive tape comprising front and back adhesive sides, each of said adhesive sides comprising a pressure sensitive adhesive, a release liner having a release side comprising a release material in contact with, bonded to and readily removable from one of said adhesive sides, and a liner back side, and a tab bonded to said first liner back side, said tab being operatively adapted to facilitate removal of said release liner from said adhesive tape by pulling on said tab.

## Description

### Field of the Invention

This invention relates to release liners for supporting double-sided pressure sensitive adhesive tapes, in particular, to such release liners which provide significant roll stability to relatively narrow rolls of double-sided pressure sensitive adhesive tape and, more particularly, to double-sided pressure sensitive adhesive tape assemblies that include release liners that provide significant stability to narrow rolls of the double-sided adhesive tape.

### Background

Adhesive tapes have been useful in a variety of industrial and automotive applications. Double sided adhesive tapes have been used to bond together a variety of substrates or surfaces and are particularly useful for industrial and automotive applications. Double-sided adhesive tapes having a pressure sensitive adhesive (PSA) on one side and a pressure sensitive adhesive on the other side (e.g., in the form of a foam core with a pressure sensitive adhesive on each side) have been found useful in bonding together substrates of similar or dissimilar materials

Such double-sided attachment tapes are typically manufactured in wide sheets, laminated onto a release liner of matching width to form a tape assembly, and then wound into a roll. The resulting wide roll of the tape assembly is then converted or separated (e.g., by slitting) into a plurality of narrower rolls of the tape assembly having the same width or varying widths, depending on the intended use(s) of the tape.

There is a continuing need for improvements to such double-sided adhesive tape assemblies. The present invention is such an improvement.

### Summary of the Invention

The present invention can provide a more roll-stable double-sided adhesive tape assembly (i.e., the coils forming a planetary roll of the tape assembly are less likely to fall apart when the roll is held suspended along its outer circumferential edge), where the double-sided tape has a pressure sensitive adhesive ("PSA") on each side thereof. In this way, the present invention satisfies the need for more stable rolls, especially more stable narrow planetary rolls of a tape assembly comprising a double-sided tape with a PSA one each side. The present invention can also provide a double-sided PSA tape assembly that includes one or more release liners that are more easily and efficiently removed in order to apply the adhesive tape.

In one aspect of the present invention, an adhesive tape assembly is provided that comprises a double-sided adhesive tape, a first or primary release liner and a second or secondary release liner. The double-sided adhesive tape comprises front and back adhesive sides, with each of the adhesive sides comprising an acrylic or other suitable pressure sensitive adhesive (PSA). The adhesive tape can further comprise an acrylic or other suitable foam core with the front adhesive side and the back adhesive side forming opposite sides thereof. The first release liner has a front or release side and a first liner back side. The release side comprises a release material in the form, for example, of an extruded or laminated layer or a coating in contact with, bonded to and readily removable from one of the adhesive sides of the tape. The second release liner has a front or release side and a back or roll stability side. The release side comprises a release material in the form, for example, of a coating or layer in contact with, bonded to and readily removable from the other of the adhesive sides. The roll stability side comprises a roll stability material in the form, for example, of a coating or layer which contacts the back side of the first release liner when the adhesive tape assembly is formed into a roll.

The roll stability material is operatively adapted (e.g., formulated) with an ethylene vinyl acetate ("EVA") to provide a substantial increase in roll stability (i.e., the coils forming the roll do not fall apart when the roll is held suspended along its outer edge), when the adhesive tape assembly is formed into a planetary roll or other roll, and especially when the tape assembly has a relatively narrow width. The ethylene vinyl acetate preferably has a sufficiently low vinyl acetate ("VA")content that the roll stability side does not block with the back side of the first release liner, when the tape assembly is wound into a roll. It is also desirable for the ethylene vinyl acetate to have a high enough VA content to obtain a coefficient of friction between the roll stability side and the back side of the first release liner that maintains stability of a roll of the adhesive tape assembly.

The roll stability material preferably comprises an ethylene vinyl acetate having a vinyl acetate content of at least about 5% and less than about 28% by weight. If desired, the roll stability layer can further comprises an anti-blocking agent in sufficiently low amounts so as to not significantly affect the coefficient of friction of the roll stability side, when measured against the first liner back side.

The adhesive tape assembly preferably includes a tab heat bonded or otherwise adhered to at least one of the first liner back side and the roll stability side. Each tab is operatively adapted (e.g., dimensioned) to facilitate removal of the release liner is it bonded to from the adhesive tape by pulling on the tab.

The release material, used to bond to at least one of the adhesive sides, preferably comprises at least one of a silicone, fluorocarbon, low adhesive backsize and blends or combinations thereof.

The back side of the first or primary liner has a contact surface that contacts the roll stability side when the adhesive tape assembly is formed into a roll. It is desirable for the contact surface of the first liner back side to have a smooth, shiny or glossy finish. Surprisingly, such a smooth, shiny or glossy finish on the contact surface of the back side of the first liner appears to improve the coefficient of friction between the contacting surfaces of the first liner back side and the roll stability side.

It is believed that roll stability for the adhesive tape assembly can occur when the roll stability side has a coefficient of friction of at least about 0.55, when measured against the back side of the first release liner. It is also believed that roll stability can occur when the roll stability side has a coefficient of friction of greater than about 0.5, when measured against the back side of the first release liner. It is further believed that roll stability can occur when the roll stability side has a coefficient of friction greater than about 0.4, when measured against the back side of the first release liner.

The adhesive tape assembly can have a width and be wound into a roll, with the roll stability side contacting the first liner back side and the resulting roll having an outer circumferential edge. As a result of the present invention the diameter of the roll can be at least about 20 times the width and the roll not fall apart when held suspended along the outer circumferential edge.

In another aspect of the present invention, a method is provided for permanently adhering or otherwise applying a double-sided pressure sensitive adhesive tape to one or more surfaces such as, for example, a surface on a product such as, e.g., an interior or exterior body molding, a window pane, etc. that is to be adhered to a surface on a vehicle (e.g., a body part of an automobile, aircraft, watercraft, etc.) or a building, and other separate surfaces on opposing substrates, etc. The method comprises providing an adhesive tape assembly like that described above and herein; removing one of the release liners from one or more lengths of the adhesive tape assembly so as to expose the pressure sensitive adhesive of an adhesive side of each length of the adhesive tape assembly; and applying, typically so as to permanently adhere, the exposed pressure sensitive adhesive of the adhesive side of each length of the adhesive tape assembly to a first surface.

It is often desirable for the adhesive tape assembly being provided to be in the form of a planetary or other desired roll. When the tape assembly is provided in roll form, the present method further comprises unwinding the roll and separating such as, for example, by cutting the adhesive tape assembly into discrete sections of desired lengths. Each of the discrete lengths can have a length and a width suitable for adhering a component onto part of a vehicle, building or other substrate.

The method can further comprise removing the remaining release liner on the one or more lengths of the adhesive tape assembly so as to expose the other adhesive side of each length of the adhesive tape assembly; and applying, typically so as to permanently adhere, the exposed pressure sensitive adhesive of the other adhesive side of each length of the adhesive tape assembly to a second surface. In this way, the adhesive tape is applied between, typically so as to permanently adhere together, the first surface and second surface.

To make it easier to remove one or both liners from the adhesive tape, the present method can further comprise heat bonding or otherwise adhering a tab to at least one of the first liner back side and the roll stability side of one or more lengths of the adhesive tape assembly. The tab is adhered sufficiently so as not to detach from the release liner before at least a portion of the release liner is pulled off of the adhesive tape. In this way, a tab can be used to at least facilitate the removal of the first release liner and/or the second release liner. Before or after one of the release liners is removed from the adhesive tape, a tab can be bonded to the remaining release liner on the one or more lengths of the adhesive tape assembly.

Typically, when a tab is bonded to both the first liner back side and the roll stability side, the release liners are removed one after the other, rather than at the same time, and the second liner is removed only after the first exposed adhesive side is applied to a surface. Thus, the present method can further comprise removing the remaining release liner on the one or more lengths of the adhesive tape assembly by pulling on a tab bonded thereto, so as to expose the other adhesive side of each length of the adhesive tape assembly; and applying, typically so as to permanently adhere, the exposed pressure sensitive adhesive of the other adhesive side of each length of the adhesive tape assembly to a second surface such as, for example, a surface of a vehicle (e.g., part of an automobile, aircraft or, watercraft), a building or the like. In this way, the adhesive tape can be applied between, typically so as to permanently adhere together, the first surface and second surface.

The following aspects are preferred embodiments of the invention:
1. An adhesive tape assembly comprising:
   a double-sided adhesive tape comprising front and back adhesive sides, each of said adhesive sides comprising a pressure sensitive adhesive; and
   a first release liner having a release side comprising a release material in contact with, bonded to and readily removable from one of said adhesive sides, and a first liner back side; and
   a second release liner having a release side comprising a release material in contact with, bonded to and readily removable from the other of said adhesive sides, and a roll stability side comprising a roll stability material which contacts the back side of said first release liner when said adhesive tape assembly is formed into a roll, said roll stability material comprising an ethylene vinyl acetate and providing a substantial increase in roll stability, when said adhesive tape assembly is formed into a roll.
2. The adhesive tape assembly as set forth in aspect 1, further comprising a tab bonded to at least one of said first liner back side and said roll stability side, each said tab being operatively adapted to facilitate removal of one said release liner from said adhesive tape by pulling on said tab.
3. The adhesive tape assembly as set forth in aspect 2, wherein said tab is heat bonded to said first liner back side, with said first liner back side comprising at least one of a polyethylene, polypropylene, polyester, thermoplastic polyolefin, copolymer of polyethylene and polypropylene, and combinations thereof, and said tab comprising at least one of a polyamide, polyethylene, polyester, thermoplastic polyolefin, copolymer of polyethylene and polypropylene, and combinations thereof.
4. The adhesive tape assembly as set forth in aspect 1, wherein said tape further comprises a foam core with said front adhesive side and said back adhesive side forming opposite sides thereof.
5. The adhesive tape assembly as set forth in aspect 1, wherein said tape has a thickness of at least about 15 mils.
6. The adhesive tape assembly as set forth in aspect 1, wherein the pressure sensitive adhesive for at least one of said adhesive sides is a high bond strength pressure sensitive adhesive that exhibits a bond strength of greater than about 112 g/cm after being bonded to a polyolefin surface and removed from the polyolefin surface at a removal rate of about 30 cm/min.
7. The adhesive tape assembly as set forth in aspect 6, wherein the release material, of at least each release liner bonded to a high bond strength pressure sensitive adhesive, comprises at least one of a silicone, fluorocarbon, low adhesive backsize and blends or combinations thereof.
8. The adhesive tape assembly as set forth in aspect 1, wherein the pressure sensitive adhesive for at least one of said adhesive sides is a high bond strength pressure sensitive adhesive that exhibits a bond strength of at least about 357 g/cm, after being bonded to a low density polyethylene surface for at least 24 hours and removed therefrom at a removal rate of about 30 cm/min.
9. The adhesive tape assembly as set forth in aspect 8, wherein the release material, of at least each release liner bonded to a high bond strength pressure sensitive adhesive, comprises at least one of a silicone and a fluorocarbon.
10. The adhesive tape assembly as set forth in aspect 1, wherein the release material bonded to at least one of said adhesive sides comprises at least one of a silicone, fluorocarbon, low adhesive backsize and blends or combinations thereof.
11. The adhesive tape assembly as set forth in aspect 1, wherein said second release liner further comprises at least one intermediate layer disposed between said release material and said roll stability material, said intermediate layer comprising at least one of a medium density polyethylene and a low density polyethylene, with said intermediate layer of low density polyethylene being disposed between said release material and said intermediate layer of medium density polyethylene, and with said intermediate layer of medium density polyethylene being disposed between said roll stability material and said intermediate layer of low density polyethylene.
12. The adhesive tape assembly as set forth in aspect 1, wherein said ethylene vinyl acetate has a sufficiently low vinyl acetate content that said roll stability side does not block with said back side of said first release liner.
13. The adhesive tape assembly as set forth in aspect 12, wherein the back side of said first release liner comprises at least one of a high density polyethylene, a medium density polyethylene, a low density polyethylene, a linear low density polyethylene and an ultra-low density polyethylene.
14. The adhesive tape assembly as set forth in aspect 1, wherein said roll stability material comprises an ethylene vinyl acetate having a vinyl acetate content of at least about 5% and less than about 28% by weight.
15. The adhesive tape assembly as set forth in aspect 1, wherein said roll stability layer further comprises an anti-blocking agent in sufficiently low amounts so as to not significantly affect the coefficient of friction of said roll stability side, when measured against said first liner back side.
16. The adhesive tape assembly as set forth in aspect 1, wherein said adhesive tape assembly has a width and is wound into a roll, with said roll stability side contacting said first liner back side, and said roll has an outer circumferential edge, a diameter that is at least about 20 times said width and does not fall apart when held suspended along said outer circumferential edge.
17. A method of otherwise applying a double-sided pressure sensitive adhesive tape to one or more surfaces, said method comprising:
   providing the adhesive tape assembly as set forth in any one of aspects 1-16;
   removing one of the release liners from one or more lengths of the adhesive tape assembly so as to expose the pressure sensitive adhesive of an adhesive side of each length of the adhesive tape assembly; and
   applying the exposed pressure sensitive adhesive of the adhesive side of each length of the adhesive tape assembly to a first surface.
18. The method as set forth in aspect 17, wherein said providing comprises providing a roll of the adhesive tape assembly, and said method further comprises:
   unwinding the roll; and
   separating the adhesive tape assembly into discrete lengths.
19. The method as set forth in aspect 18, wherein each of the discrete lengths has a length and a width suitable for adhering a component onto part of a vehicle.
20. The method as set forth in aspect 17, further comprising:
   removing the remaining release liner on the one or more lengths of the adhesive tape assembly so as to expose the other adhesive side of each length of the adhesive tape assembly; and
   applying the exposed pressure sensitive adhesive of the other adhesive side of each length of the adhesive tape assembly to a second surface,
   wherein the adhesive tape is applied between the first surface and second surface.
21. The method as set forth in aspect 17, further comprising:
   bonding a tab to at least one of the first liner back side and the roll stability side of one or more lengths of the adhesive tape assembly.
22. The method as set forth in aspect 21, wherein after said removing, the tab is bonded to the remaining release liner on the one or more lengths of the adhesive tape assembly.
23. The method as set forth in aspect 21, wherein said bonding comprises bonding a tab to the back side of the first release liner, and said removing comprises removing the second release liner.
24. The method as set forth in aspect 23, wherein said bonding further comprises bonding another tab to the roll stability side of the second releases liner, and said removing comprises pulling the other tab to remove the second release liner.
25. The method as set forth in aspect 21, wherein said bonding comprises bonding a tab to the roll stability side of the second release liner, and said removing comprises removing the second release liner by pulling on the tab.
26. The method as set forth in aspect 21, further comprising:
   removing the remaining release liner on the one or more lengths of the adhesive tape assembly by pulling on the tab, so as to expose the other adhesive side of each length of the adhesive tape assembly; and
   applying the exposed pressure sensitive adhesive of the other adhesive side of each length of the adhesive tape assembly to a second surface,
   wherein the adhesive tape is applied between the first surface and second surface.
27. An article assembly comprising:
   a plastic or an elastomeric article;
   a double-sided adhesive tape comprising front and back adhesive sides, each of said adhesive sides comprising a pressure sensitive adhesive;
   a release liner having a release side comprising a release material in contact with, bonded to and readily removable from one of said adhesive sides, and a liner back side; and
   a tab bonded to said first liner back side, said tab being operatively adapted to facilitate removal of said release liner from said adhesive tape by pulling on said tab.
28. The article assemble as set forth in aspect 27, wherein said liner back side is a roll stability side comprising a roll stability material, said roll stability material comprising an ethylene vinyl acetate.

### Brief Description of the Drawing

Fig. 1 is an enlarged cross-sectional view of a portion of one exemplary tape assembly according to the present invention;
Fig. 2 is a side plan view of a tape assembly of narrow width and wound into a roll, according to the present invention;
Fig. 3 is an edge view of the tape assembly roll of Fig. 2.
Fig. 4 is a perspective view of a tape assembly of narrow width and wound into a roll, according to the present invention; and
Fig. 5 is a perspective view of a heat bond tabbed tape assembly, according to the present invention, with one PSA layer of the tape assembly being adhered to an article.

### Detailed Description of the Present Invention

Although the present invention is herein described in terms of specific embodiments, it will be readily apparent to those skilled in this art that various modifications, rearrangements, and substitutions can be made without departing from the spirit of the invention. The scope of the present invention is thus only limited by the claims appended hereto.

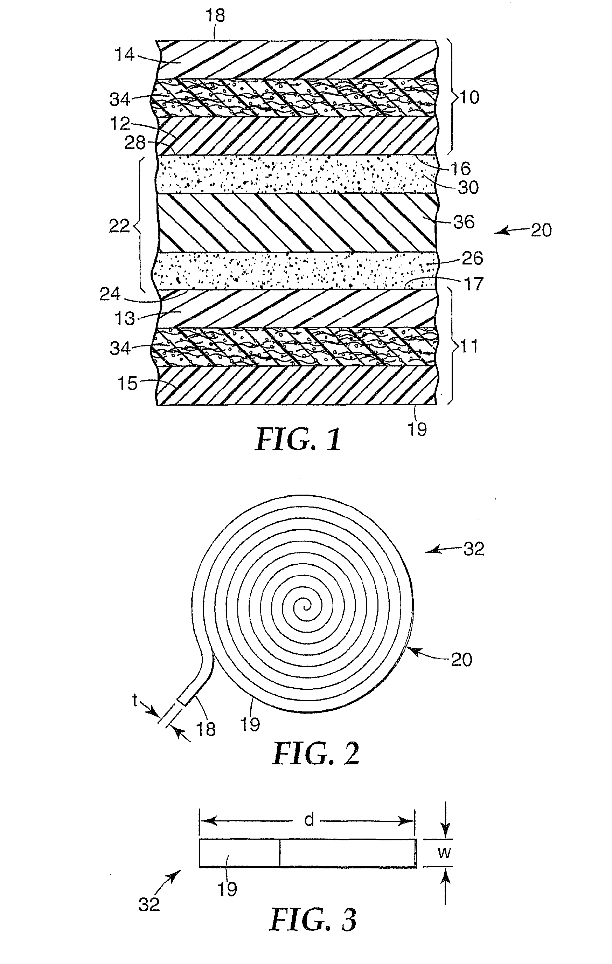

Referring to Fig. 1, a primary release liner 11 according to the present invention is made with at least two layers, a release layer 13 and a back side layer 15. The layers 13 and 15 define a release or front liner side or surface 17 and a liner back side or surface 19 of the liner 11, respectively. A secondary release liner 10 according to the present invention is made with at least two layers, a release layer 12 and a roll stability layer 14. The layers 12 and 14 define a release or front liner side or surface 16 and a back liner or roll stability side or surface 18 of the liner 10, respectively. An adhesive tape assembly 20 can be made, according to the present invention, by releasably bonding the liners 10 and 11 to a double-sided adhesive tape 22. The tape 22 includes a front adhesive side or surface 24 defined by a PSA layer 26 of a pressure sensitive adhesive and a back adhesive side or surface 28 defined by a PSA layer 30 of the same or a different pressure sensitive adhesive. The release layers 12 and 13 are in contact with, bonded to and readily removable from the corresponding PSA layers 30 and 26. A release side is readily removable from a PSA tape, when the removal of the released liner does not cause significant damage to the adhesive tape (i.e., does not cause cohesive failure, substantial tearing or substantial permanent stretching of the tape). The roll stability layer 14 comprises an ethylene vinyl acetate and contacts the back side layer 15 when the adhesive tape assembly 20 is formed into a roll. The roll stability layer 14 is also operatively adapted (e.g., formulated), as disclosed herein, to provide the adhesive tape assembly 20 with a substantial increase in roll stability when formed (e.g., convolutedly wound) into a roll 32 of narrow width.

The release layers 12 and 13 may each comprise any material suitable for functioning as release layers and remaining integral with their respective liners 10 and 11. Each of the release layers 12 and 13 may have its release material in the form of a continuous or discontinuous (e.g., patterned) coating or layer that is intended to contact, bond to and be readily removable from one of the PSA layers of the double-side PSA tape 22. The release material can be coated onto, extruded as part of, laminated as part of or otherwise provided to form the surfaces 16 and 17 of the release layers 12 and 13, respectively. Release materials may include polyolefins, and can preferably include silicones. Fluorocarbons and low adhesive backsizes, such as those made for polyureas, polyurethanes, polyacrylates, etc., may also be preferable over polyolefins. General knowledge in the art can be used to help in the selection of the release material for a certain pressure-sensitive adhesive. For example, a polyacrylate PSA can be used with release materials made from polyolefins, silicones, and fluorocarbons. A tackified block copolymer PSA can be used with polyurea or polyurethane backsizes as well as silicones and fluorocarbons. Another potentially suitable release material is perfluoroether.

It may be desirable for either of the release layers 12 and 13 to comprise a polyolefin such as, for example, a polyethylene, a polypropylene, a copolymer of a polyethylene and/or a polypropylene, or a blend of polyethylene and/or a polypropylene. Useful polyethylenes include high density polyethylene (HDPE), medium density polyethylene (MDPE), low density polyethylene (LDPE), linear low density polyethylene (LLDPE), and ultra-low density polyethylene (ULDPE). Medium density polyethylenes have a typical density in the range from about 0.93 g/cc to about 0.94 g/cc; low density polyethylenes have a typical density in the range from about 0.90 g/cc to about 0.92 g/cc; and linear low and ultra low density polyethylenes have densities below about 0.90 g/cc. The polyethylenes can be made by any method including use of conventional catalysts as well as metallocene catalysts. Suitable polyethylenes for the release layers 12 and 13 may include MDPE, LDPE, LLDPE, and ULDPE.

It is desirable for the roll stability layer 14 to comprise a copolymer of an ethylene vinyl acetate ("EVA") that has a low enough vinyl acetate ("VA") content (e.g., less than about 28% by weight) to prevent the roll stability layer 14 from blocking with the back side layer 15, when the tape assembly 20 is wound into a roll 32. Blocking occurs when, for example, the two contacting surfaces 18 and 19, respectively, of the liners 10 and 11 adhere to one another with sufficient force to cause stretching, plastic deformation or tearing of either liner 10,11 and/or the tape 22 when the roll 32 is unwound. A release liner is readily removable from the PSA tape, when such damage to the release liner and/or tape does not occur during the removal of the release liner from the tape. It is also desirable for the ethylene vinyl acetate to have a high enough VA content (e.g., equal to or greater than about 5% by weight) to obtain a coefficient of friction between the roll stability layer 14 and the back side layer 15 that maintains stability of a roll 32 of the adhesive tape assembly 20.

It is desirable for the roll stability layer 14 to comprise an ethylene vinyl acetate having a vinyl acetate content in the range of at least about 5% and less than about 28% by weight. It is also desirable for the ethylene vinyl acetate of the roll stability layer 14 to have a vinyl acetate content in the range of greater than about 5% up to about 24% by weight. It is further desirable for the ethylene vinyl acetate of the roll stability layer 14 to have a vinyl acetate content in the range of about 8% to about 20% by weight. In addition, it is believed that a VA content of about 12% by weight in the EVA of layer 14 can prevent blocking between the layer 14 of EVA and a layer 15 of LDPE, without the need to use an anti-blocking agent, when the tape assembly 20 is wound into a roll. It is also believed that the degree of blocking between a contacting PE layer 15 and EVA layer 14 of a rolled-up tape assembly 20 will decrease as the density of the PE decreases. For example, a layer comprising a polyethylene can have a density of up to about 0.92 g/cc in order to be readily removable from a PSA layer and still prevent blocking between the PE layer and the EVA layer.

If it is desirable for the roll stability layer 14 to include an anti-blocking agent (e.g., diatomaceous earth, clay and talc), it should be in sufficiently low amounts so as not to significantly affect the coefficient of friction of the roll stability layer 14, when measured against the back side layer 15. The addition of an anti-blocking should enable lower levels of VA to be used in the EVA of the roll stability layer 14. An anti-blocking agent may be added to the EVA of the roll stability layer 14 while layer 14 is being formed (e.g., by an extrusion process). It is believed that using an anti-blocking agent (i.e., diatomaceous earth in a polyethylene binder) made by Ampacet Corporation, Tarrytown, New York, under the product designation Ampacet 10063, in amounts up to about 5% by weight based on the amount of ethylene vinyl acetate, will have little effect on the coefficient of friction between a roll stability layer 14 and a back side layer 15. This anti-blocking agent can be fed, by separate feed stream, into the extruder processing the EVA material so that the extruder mixes the EVA and the anti-blocking agent together.

It can be desirable for either or both of the release liners 10 and 11 to include an optional intermediate support layer 34 disposed between the layers 12 and 14 and layers 13 and 15, respectively, to provide additional structural support to the release liner. Such additional support can be desirable, for example, in order to facilitate separation of a liner 10 or 11 from the adhesive tape 22. By making either or both of the liners 10 and 11 stiffer than the adhesive tape 22, with the addition of a suitable intermediate layer 34, it is usually easier to separate the liners 10 and 11 from the adhesive tape 22. The intermediate layer 34 may be a substantially continuous film, e.g., an extruded or solvent coated film, or may be a web, e.g., a non-woven, knit, woven, or other web, that has one or more holes or perforations therein, such as that disclosed in U.S. Patent No. 5,167,995, which is incorporated herein by reference in its entirety. Satisfactory results can be obtained with an intermediate layer 34 for liner 11 comprising a high density polyethylene ("HDPE") and with an intermediate layer 34 for liner 10 comprising a medium density polyethylene ("MDPE"). High density polyethylenes have a typical density of about 0.96 g/cc and medium density PEs have a typical density in the range from about 0.93 g/cc to about 0.94 g/cc. Other suitable liners may include paper liners with a polymer layer, for example, polyethylene coated, laminated or otherwise provided on both sides to provide stability to the paper

In one embodiment, the release liner 10 can further comprise one or more intermediate layers 34 disposed between the release layer 12 and the roll stability layer 14. The intermediate layers can comprise at least one of a medium density polyethylene and a low density polyethylene, with the intermediate layer of low density polyethylene being sandwiched or otherwise disposed between the release layer 12 and the intermediate layer of medium density polyethylene, and with the intermediate layer of medium density polyethylene being sandwiched or otherwise disposed between the roll stability layer 14 and the intermediate layer of low density polyethylene.

The release liners 10 and 11 of the present invention can be formed by coextruding the various layers and laminating them together at the same time. Alternatively, the liners 10 and 11 can be formed by extruding one of the layers (e.g., the release layer 12) onto another layer (e.g., the stabilizing layer 14). In either case conventional commercially available extruders and techniques well known in the art can be used. For example, conventional blown film extrusion equipment and techniques can be used to simultaneously co-extrude two or more layers (e.g., layers 12, 14 and 34). One extruder is used to extrude each layer material. The extruders force their corresponding layers through a common die. In this way, the various layers can be laminated together simultaneously as they are formed. In blown film extrusion, the laminated layers are extruded into the form of a tube. The tube is then collapsed, rolled flat and the edges trimmed to form two liners. The two liners are then separated and, typically, each is wound into a roll for subsequent lamination to a double sided adhesive tape 22 to form a tape assembly 20. In the case where the release material includes silicone or fluorocarbon, for example, the release material may be applied as a solvent based coating, a water based coating, or a 100% solids coating (i.e., the solids are in liquid form without a solvent) onto the layers 12 and 13.

It is desirable for the back side layer 15 to comprise an olefinic material, such as a polyolefin. Satisfactory results have been obtained with a back side layer 15 comprising a polyethylene. The back side layer 15 may also comprise a polypropylene, a copolymer of a polyethylene and/or a polypropylene, or a blend of polyethylene and/or a polypropylene. Satisfactory results have been obtained with PSA layers 30 and 26 comprising an acrylic pressure sensitive adhesive. In particular, satisfactory results have been obtained with acrylic PSA layers 30 and 26 which includes a foam core layer 36. The foam core layer 36 is disposed between the PSA layers 26 and 30.

The present invention may be suitable for any double-sided pressure-sensitive adhesive (PSA) tapes that are tacky on both major surfaces of the tape, and is particularly useful when the tape includes at least one high bond strength PSA. Examples of such tapes include an adhesive transfer tape that is a single layer of pressure-sensitive adhesive or a double coated tape that may or may not include a backing layer between two or more layers of pressure-sensitive adhesive. The double coated tape may have only two layers of pressure-sensitive adhesive adhered to each other to form the tape. The adhesives on each maj or surface can be the same or they may be different as might be the case if the adhesives were formulated to adhere two substrates together with the substrates having different types of surfaces, e.g., a high energy surface such as a metal surface to a low energy surface such as a polyolefin surface. The double coated tape may include a layer between the two adhesives. This layer may be any suitable structure for a tape backing. Examples of such structures include a polymeric film, a polymeric foam, a metal foil, a paper, a nonwoven fabric, a woven fabric, a ceramic woven or nonwoven cloth, and the like. Suitable polymeric films can include biaxially oriented polyester, biaxially oriented polypropylene, mono-axially oriented polypropylene, and the like. Suitable polymeric foams include polyethylene foams, polyurethane foams, polyacrylate foams, neoprene foams, and the like.

The invention contemplates the use of any suitable PSA in the practice of the invention. PSAs are generally known in the art and include polyacrylate polymers and copolymers, polyurethanes, ethylene vinyl acetate copolymers, natural rubber, block copolymers, and the like. The adhesives may include tackifiers and plasticizers as need to provide the desired adhesive and modulus properties for the end use of the tape.

The adhesives may be formed by bulk polymerization, solvent polymerization, emulsion polymerization, etc. and can be cross-linked or left uncrosslinked. Cross-linking may be accomplished by various means known by those skilled in the art such as chemical cross-linking, thermal cross-linking, radiation cross-linking, and combinations thereof.

The pressure sensitive adhesive for one or both of the adhesive layers 26 and 30 of the tape 22 can be a high bond strength PSA that exhibits a bond strength, or requires a removal force, of greater than about 10 ounces per inch (112 g/cm) after being bonded to a polyolefin surface (e.g., a polyolefin like polyethylene, and especially a low density polyethylene), and removed from the polyolefin surface at a removal rate of about 12 inches per minute (30 cm/min). High bond strength PSAs can also be characterized as those that exhibit a bond strength, or require a removal force, of at least about 2.0 pounds per inch (357 g/cm), and in some cases at least about 6.0 1bs./in (1.07 Kg/cm), after being bonded to a low density polyethylene (LDPE) surface for at least 24 hours and removed from the LDPE surface at a removal rate of about 12 inches per minute (30 cm/min). Such high bond strength pressure sensitive adhesives can be obtained, for example, using the processes and compositions described in PCT Patent Publication No. WO 00/06637 (PCT Application No. US 99/17344, filed July 30, 1999) and U.S. Patent No. 6,103,152, which are both incorporated herein by reference in their entirety. Other PSAs that may be suitable for use in the adhesive tape of the present inventive tape assembly can be found in PCT Patent Publication No. WO 01/57151 (PCT Application No. US 01/02976, filed January 30, 2001) and U.S. Patent No. 6,630,531, which are both incorporated herein by reference in their entirety.

In order to make it even easier for a release liner to be removed from a PSA layer of the adhesive tape 22, and thereby facilitate the process of using the inventive tape assembly even further, it can be desirable for the release material to be chosen such that the strength of the bond between the PSA layer and the release layer is no more than about 5 oz/in (56 g/cm). When the adhesive layer comprises a high bond strength PSA, like those described above, it has been necessary to use a silicone or similar release material on the release layer of the corresponding release liner to obtain such low liner release forces.

It can be desirable for the release material, of at least each release liner bonded to a high bond strength pressure sensitive adhesive, to comprise at least one of a silicone and a fluorocarbon, and may also include a low adhesive backsize, and blends or combinations thereof, in an effort to ensure that the release liner is readily removable from such a high bond strength PSA. These release materials are typically in an amount and of a nature that they would prevent a polymeric tab, such as that described below and made from a polyamide, PE, TPO or PE/PP, from being sufficiently heat bondable to the release side of the release liner to consistently allow the release liner to be removed by pulling on the tab (i.e., the tab does not pull off before the release liner is removed).

The PSA layer 26 can be supplied on its own release liner 11 and subsequently bonded to the PSA layer 30 or the intermediate layer 36, depending on the tape construction desired. Alternatively, the PSA layer 30 can be similarly supplied. It can be desirable for at least one of the pressure sensitive adhesive layers 26 and 30 to be readily bondable to surfaces of a wide range of materials including, for example, metal materials, ceramic materials, and/or polymeric materials. Polymeric materials may include thermoset and thermoplastic plastic materials such as, for example, those used to make automotive exterior trim parts such as body side moldings and claddings used on the sides of automobile bodies, as well as to make other plastic articles. It may also be desirable for at least one of the pressure sensitive adhesive layers 26 and 30 to be readily bondable to surfaces of a wide range of thermoset and thermoplastic olefinic elastomers such as, for example, SANTOPRENE (manufactured by Monsanto, St. Louis, Missouri), ethylene propylene diene monomer (EPDM), polypropylene, high density polyethylene and low density polyethylene. An adhesion promoter (e.g., the 3M 4298UV Adhesion Promoter manufactured by 3M Company, St. Paul, Minnesota) can be used to promote the bonding of the PSA to such elastomeric materials. Elastomeric materials have been used, for example, to make weatherstrip for sealing automobile doors and windows, as well as to make other elastomeric articles.

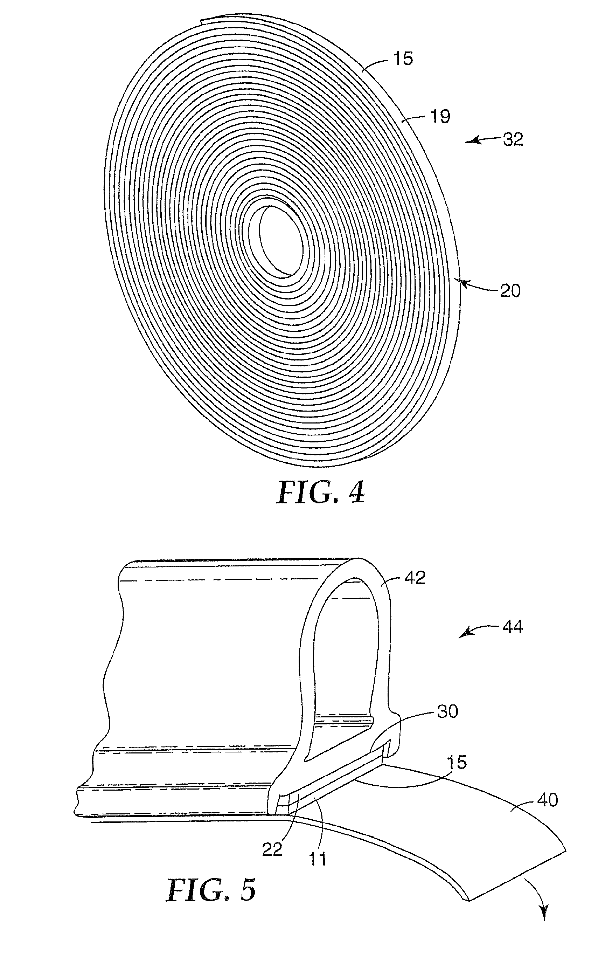

Referring to Fig. 2, the surface 19 of the back side layer 15 contacts the surface 18 of the roll stability layer 14 when the adhesive tape assembly 20 is wound into a roll 32 (see also Fig. 4). Typically, when the assembly 20 is wound into a roll 32, the back side surface 19. Unexpectedly, it has been found desirable for the contact surface 19 to have a smooth, shiny or glossy finish. Surprisingly, such a smooth, shiny or glossy finish on the contact surface 19 of the back side layer 15 appears to improve the coefficient of friction between the contacting surfaces 19 and 18, respectively, of the back side layer 15 and the roll stability layer 14. Even so, the adhesive tape assembly 20 may also exhibit improved stability with the contact surface 19 of the back side layer 15 having a matte finish.

Satisfactory results can be obtained when the contact surface 19 of the back side layer 15 has a surface roughness (i.e., a degree of smoothness) ranging from about 8 microinches (.0002 mm) to about 26 microinches (.00066 mm), with an overall average surface roughness of about 13.5 microinches (.000343 mm), as measured with a profilometer such as the POCKET SURF III ® manufactured by Federal Products Corporation of Providence, Rhode Island. It is believed that satisfactory results can be obtained with an overall average surface roughness of less than or greater than the 13.5 microinches (.000343 mm) actually measured. It is also believed satisfactory for the contact surface 19 of the back side layer 15 to have an overall average surface roughness of up to and including about 26 microinches (.00066 mm). It is believed that satisfactory results may be obtained with the surface 19 of the back side layer 15 having an overall average surface roughness of less than about 33 microinches (.00084 mm) and, possibly, even less than about 39.2 microinches (.000996 mm).

One theory for why roll stability occurs with the back side layer 15 having a smooth, shiny or glossy contact surface 19 is that the surface 19 is smooth enough and the contact surface 18 of the roll stability layer 14 is tacky enough so that, when the two contact surfaces 18 and 19 are pressed against each other (e.g., when the adhesive tape assembly 20 is formed into a narrow width roll 32), the contact surface 18 of the roll stability layer 14 is able to wet-out onto the smooth contact surface 19 of the back side layer 15. This wetting-out results in a substantial elimination of air being trapped (i.e., results in a vacuum being formed) between the back side layer 15 and the roll stability layer 14, sort of like a suction-cup effect. Atmospheric pressure can then generate a normal force which tends to compress or hold together the contacting surfaces 19 and 18, respectively, of the back side layer 15 and the roll stability layer 14. This atmospheric pressure induced normal force is of a magnitude that sufficiently increases the frictional forces between the contacting surfaces 18 and 19 to improve the stability of the narrow width roll 32.

The test results indicate that roll stability for the adhesive tape assembly 20 can occur when the roll stability layer 14 has a kinematic coefficient of friction of about 0.577, when measured against a back side layer 15. Even so, it is believed that lower coefficients of friction may also provide significant improvements in roll stability. It is believed that roll stability for the adhesive tape assembly 20 can occur when the roll stability layer 14 has a coefficient of friction of at least about 0.55, when measured against the surface 19 of the back side layer 15. It is also believed that roll stability can occur when the roll stability layer 14 has a coefficient of friction of greater than about 0.5, when measured against the back side layer 15. It is further believed that roll stability can occur when the roll stability layer 14 has a coefficient of friction greater than about 0.4, when measured against the back side layer 15.

The coefficient of friction between the back side layer 15 and the roll stability layer 14 can be determined according to ASTM D4518-91 with the following changes. An inclined plane test apparatus can be used having dimensions of 45.7cm by 20.3cm. The test can be conducted using a block weighing 8.75 pound (3.98 kg) and measuring 10.2 cm by 10.2cm. A test film of ethylene vinyl acetate, containing 12% by weight vinyl acetate, can serve as the present release liner 10 (i.e., roll stability layer 14) and taped to the surface of the inclined plane and a test film of any desired back side layer 15 can be taped to a block. Each block can be placed on the inclined plane at 0°. The inclined plane can then be raised until the block started to slide down the plane. The tangent of the angle of the inclined plane is then measured as the coefficient of friction of the two surfaces.

Planetary rolls of a double-sided PSA tape assembly that are made with a tape having a thickness of at least about 15 mils or more (e.g., typically foam tapes) can be particularly prone to roll instability problems, because the rolls tend to be larger in diameter compared to tape assemblies with thinner tapes, in order to provide the same length of tape on a single roll. Such tape assemblies that are narrow in width can be even more likely to exhibit roll instability. The present inventive tape assembly is less likely to exhibit roll instability, even when comparable lengths of the tape assembly are relatively narrow in width and the adhesive tape has a thickness of at least about 15 mils or more.

Referring to Fig. 3, when the adhesive tape assembly 20 has an overall thickness of about .052 inches (.132 cm) and is wound into a roll 32, with the roll stability layer 14 contacting the back side layer 15, the roll can exhibit roll stability (i.e., the coils forming the roll 32 do not substantially telescope or fall apart when the roll 32 is held suspended along its outer circumferential edge) when the roll 32 has a diameter *d* that is at least about 20 times the width w of the adhesive tape assembly 20. This is the minimum diameter to width ratio at which roll stability problems have been experienced with rolls of prior adhesive tape assemblies comprising a double-sided adhesive tape, with a first PSA side and a second PSA side, and a release liner releasably bonded to each PSA side.

An example of an adhesive tape assembly 20 that can be used to form a narrow roll 32 according to the present invention, has a width *w* of up to about 1 inch (2.54 cm), a thickness of about .052 inches (.132 cm) and a length in the range of from about 36 yards (33 m) to about 144 yards (132 m) and, it is believed, even longer. For many applications, the present adhesive tape assemblies will have a width *w* of up to about 0.5 inches (1.27 cm). Prior adhesive tape assemblies having a length of about 36 yards (33 m), a thickness of about .051 inches (.129 cm) and a width *w* of about 5 mm (.196 inches) were wound into a roll 32 having a roll diameter to width ratio of about 49.7. Prior adhesive tape assemblies having a length of about 72 yards (65.8 m), a thickness of about .051 inches (.129 cm) and a width w of about .25 inches (.635 cm) were wound into a roll 32 having a roll diameter to width ratio of about 60. Prior adhesive tape assemblies having a length of about 108 yards (98.8 m), a thickness of about .051 inches (.129 cm) and a width w of about 0.5 inches (1.27 cm) were wound into a roll 32 having a roll diameter to width ratio of about 33.

Referring to Fig. 5, in one embodiment of an article assembly 44 according to the present invention, the assembly 44 includes the adhesive tape 22 bonded on its side 28 to, for example, a plastic or elastomeric article 42 (e.g, an automotive exterior trim part, such as body side moldings and claddings used on the sides of automobile bodies, and the like; a weatherstrip for sealing automobile doors and windows, and the like; as well as other plastic and elastomeric containing articles), with the release liner 11 being releasably bonded on its side 17 to the other side 24 of the tape 22. A tab 40 is bonded the backside 19 of the release liner 11. It is preferable that the surface 19 of the back side layer 15 be substantially free of a release material such as, for example, silicone that can prevent or at least significantly inhibit the bonding of a tab 40 to the back side layer 15 of the release liner 11. The bond between the tab 40 and the release liner 11 should be strong enough to allow the release liner 11 to be removed from the adhesive tape 22 by pulling on the tab 40 in the direction shown by the arrow in Fig. 5. It can also be preferable for the back side (surface 18) of the release liner 10 to be similarly free of such a release material, especially if a tab 40 is intended to be bonded to the back side 18 of release liner 10. Such a use of a tab 40 (i.e., bonded to surface 19 and/or 18) can enable the corresponding release liner (i.e., release liner 11 and/or 10, respectively) to be more easily removed. Fig. 5 shows the release liner 10 removed and the side 28 of the adhesive tape 22 bonded to the article 42. Alternatively, the release liner 11 can be removed and the article 42 bonded to the other side 24 of tape 22. With such a construction, it can be desirable to bond a tab 40 to the backside 18 of release liner 10.

The first liner back side layer 15 can comprises at least one of a polyethylene, polypropylene, polyester, thermoplastic polyolefin, copolymer of polyethylene and polypropylene, and combinations thereof in the form, for example, of a heat bondable layer. The tab 40 can comprise at least one of a polyamide, polyethylene, polyester, thermoplastic polyolefin, copolymer of polyethylene and polypropylene, and combinations thereof.

The back side layer 15 of the release liner 11 can comprise a polyethylene (PE) material such as, for example, at least one of a high density polyethylene (HDPE), a medium density polyethylene (MDPE), a low density polyethylene (LDPE), a linear low density polyethylene (LLDPE) and an ultra-low density polyethylene (ULDPE). The first liner back side layer 15 can also comprise any other polymeric material that is suitable for heat bonding to a polymeric tab 40 such as, for example, a polypropylene (PP), polyester, thermoplastic polyolefin (TPO), a copolymer of polyethylene and polypropylene (PE/PP), and combinations thereof, where the tab 40 is operatively adapted (e.g., dimensioned and formulated) for being heat bonded to the back liner surface 19 of the first release liner 11 so as to allow the first release liner 11 to be removed from the adhesive tape 22 by pulling on the tab 40 in the direction shown by the arrow in Fig. 5. Such a tab 40 is intended to make it easier for the first release liner 11 to be removed. Suitable materials for a tab 40, intended to be heat bonded to a PE, TPO or PE/PP first liner back side layer 15, can include polyamides, PEs, TPOs, and PE/PPs. Suitable materials for a tab 40 intended to be heat bonded to a PP first liner back side layer 15 can include polyamides, TPOs, and PE/PPs. Suitable materials for a tab 40 to be heat bonded to a polyester first liner back side layer 15 can include polyamides.

Various modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only with the scope of the invention intended to be limited only by the claims set forth herein as follows and equivalents thereof.

## Claims

1. An article assembly comprising:
a plastic or an elastomeric article;
a double-sided adhesive tape comprising front and back adhesive sides, each of said adhesive sides comprising a pressure sensitive adhesive;
a release liner having a release side comprising a release material in contact with, bonded to and readily removable from one of said adhesive sides, and a liner back side; and
a tab bonded to said first liner back side, said tab being operatively adapted to facilitate removal of said release liner from said adhesive tape by pulling on said tab.

2. The article assemble as set forth in claim 1, wherein said liner back side is a roll stability side comprising a roll stability material, said roll stability material comprising an ethylene vinyl acetate.
